# EUROPÄISCHE PATENTSCHRIFT

(11) **EP 3 663 173 B1**
(45) Veröffentlichungstag und Bekanntmachung des Hinweises auf die Patenterteilung: **17.11.2021**
(21) Anmeldenummer: 19212794.2
(22) Anmeldetag: 02.12.2019
(51) Int. Cl.: B62D 33/07, B62D 21/15

(54) **VORRICHTUNG ZUM LAGERN EINES HINTEREN BEREICHS EINES FAHRERHAUSES EINES NUTZFAHRZEUGS**
DEVICE FOR BEARING A REAR AREA OF A DRIVER CAB OF A COMMERCIAL VEHICLE
DISPOSITIF DE SUPPORT D'UNE ZONE ARRIÈRE D'UNE CABINE D'UN VÉHICULE UTILITAIRE

(30) Priorität: 07.12.2018 DE 102018131403
(43) Veröffentlichungstag der Anmeldung: 10.06.2020
(73) Patentinhaber: MAN Truck & Bus SE, 80995 München (DE)
(72) Erfinder: Hron, Tim Benjamin, 85221 Dachau (DE)
(74) Vertreter: v. Bezold & Partner Patentanwälte - PartG mbB

(56) Entgegenhaltungen:
- DE-A1- 19 961 670
- DE-A1-102015 009 474
- DE-C1- 10 137 380
- JP-A- H10 287 268
- JP-A- H11 240 463

## Beschreibung

### Beschreibung

Die Erfindung betrifft eine Vorrichtung zum Lagern eines hinteren Bereichs eines Fahrerhauses eines Nutzfahrzeugs und ein Nutzfahrzeug mit einer Vorrichtung zum Lagern eines hinteren Bereichs eines Fahrerhauses des Nutzfahrzeugs.

Beim Crashtest A der ECE R29-3 trifft ein Pendel auf die Front eines Fahrerhauses eines Nutzfahrzeugs. Um einen Überlebensraum für Insassen im Fahrerhaus zu gewährleisten, müssen Maßnahmen ergriffen werden, um die Aufprallenergie zu absorbieren. Die Maßnahmen können beispielsweise im Bereich des Fahrerhauses selbst oder im Bereich von dessen Lagerung umgesetzt werden.

Die DE 199 61 670 A1 offenbart eine hintere Lagerung eines kippbaren Fahrerhauses eines Frontlenker-Lastkraftwagen gemäß dem Oberbegriff des Anspruchs 1. Die hintere Lagerung weist eine Lagestabilisierungseinrichtung auf, bestehend aus einer fest an einer Trägerkonsole angeordneten Lagerkonsole und einem im Zusammenwirken mit der Lagerkonsole die Längsbewegungen des Fahrerhauses begrenzenden Anschlag, der fest an einem Tragarm und über diesen ortsfest in Bezug auf den Fahrgestellrahmen angeordnet ist. Zudem ist ein Wegbegrenzungsbolzen vorgesehen, der an einem der beiden Teile - Lagerkonsole oder Anschlag - angeordnet ist und ein im anderen der beiden Teile - Anschlag oder Lagerkonsole - ausgebildetes Vertikallangloch mit gegenüber seinem Durchmesser wesentlich größerer Breite und Länge durchdringt und im Zusammenwirken mit diesem Vertikallangloch sowohl die Quer- und Vertikalbewegungen des Fahrerhauses als auch den Ein- und Ausfederweg eines Federbeines begrenzt.

Die JP H10 287268 A offenbart eine Fahrerhauslagerung für einen Lastkraftwagen mit einem Schockabsorber, der einen elastischen Block aufweist.

Der Erfindung liegt die Aufgabe zu Grunde, eine alternative und/oder verbesserte hintere Lagerung für ein Fahrerhaus eines Nutzfahrzeugs zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Vorrichtung zum Lagern eines hinteren Bereichs eines (z. B. kippbaren) Fahrerhauses eines Nutzfahrzeugs. Die Vorrichtung weist einen Träger, vorzugweise Querträger, auf. Die Vorrichtung weist eine Konsole, die zum (z. B. lösbaren) Befestigen an einem Fahrzeugrahmen des Nutzfahrzeugs ausgebildet ist, auf. Die Vorrichtung weist eine Befestigungsvorrichtung auf, die zum (z. B. lösbaren) Befestigen am Fahrerhaus ausgebildet ist und an dem Träger und/oder der Konsole zum (z. B. fahrerhausheckseitigen) Abstützen des Fahrerhauses anbringbar ist, vorzugsweise gelenkig und/oder verriegelbar. Die Vorrichtung weist ein (z. B. einteiliges oder mehrteiliges) Crashelement auf, das einen Verbindungsabschnitt des Trägers mit einem Verbindungsabschnitt der Konsole verbindet (z. B. abstützt) und bezüglich einer Längsachse des Nutzfahrzeugs zwischen dem Verbindungsabschnitt des Trägers und dem Verbindungsabschnitt der Konsole angeordnet ist.

Durch das Vorsehen des Crashelements kann ermöglicht werden, dass sich bei einem Frontalaufprall der Verbindungsabschnitt des Trägers, das Crashelement und der Verbindungsabschnitt der Konsole gemeinsam auf eine vorbestimmte Weise (plastisch) verformen, ohne dass dabei deren Verbindung bricht oder gelöst wird. Durch die gemeinsame Verformung kann Aufprallenergie abgebaut werden. Durch das Crashelement kann die Verformbarkeit der gesamten hinteren Lagerung des Fahrerhauses erhöht und somit der Überlebensraum der Fahrerhausinsassen vergrößert werden. Die erhöhte Verformbarkeit ermöglicht zudem, dass mehr Aufprallenergie absorbiert werden kann. Das Crashelement kann zusätzlich die Belastungen auf die Konsole während der Verformung verringern und dadurch beispielsweise ein Brechen der Konsole verhindern.

Zweckmäßig kann sich das Crashelement dadurch auszeichnen, dass es sich bestimmungsgemäß bei einem Frontalaufprall unter Aufprallenergieabbau vorbestimmt (plastisch) verformt.

In einem Ausführungsbeispiel ist das Crashelement dazu ausgebildet, sich bei einem Frontalaufprall des Nutzfahrzeugs mit dem Verbindungsabschnitt der Konsole und/oder dem Verbindungsabschnitt des Trägers unter einem Aufprallenergieabbau vorbestimmt zu verformen, vorzugsweise parallelogrammartig.

In einer Weiterbildung weist die vorbestimmte Verformung eine Formänderung (zum Beispiel einer gemeinsamen, von den Verbindungsabschnitten und dem Crashelement gebildeten Form) von einem rechteckförmigen Querschnitt zu einem schiefwinkligen parallelogrammförmigen Querschnitt auf. Alternativ oder zusätzlich kann die vorbestimmte Verformung beispielsweise eine Formänderung (zum Beispiel einer gemeinsamen, von den Verbindungsabschnitten und dem Crashelement gebildeten Form) von einer Quaderform zu einer schiefwinkligen Parallelepipedform aufweisen.

In einem weiteren Ausführungsbeispiel bleibt während der vorbestimmten Verformung eine Abstützung des Trägers an dem Fahrzeugrahmen durch die Konsole mittels des Crashelements erhalten. Alternativ oder zusätzlich bleibt die Verbindung zwischen dem Verbindungsabschnitt des Trägers und dem Verbindungsabschnitt der Konsole durch das Crashelement erhalten.

In einer Ausführungsform umgibt das Crashelement den Verbindungsabschnitt des Trägers und/oder den Verbindungsabschnitt der Konsole sandwichartig und/oder zumindest zweiseitig. Somit kann ein sicherer Verbund mit einer großen Verformbarkeit ermöglicht werden.

In einer weiteren Ausführungsform ist das Crashelement in direktem Kontakt mit dem Verbindungsabschnitt des Trägers und/oder dem Verbindungsabschnitt der Konsole.

In einer Ausführungsvariante ist der Verbindungsabschnitt des Trägers von dem Verbindungsabschnitt der Konsole beabstandet (zum Beispiel durch das Crashelement).

In einer weiteren Ausführungsvariante ist der Verbindungsabschnitt des Trägers von dem Verbindungsabschnitts der Konsole umgeben. Alternativ kann beispielsweise der Verbindungsabschnitt der Konsole von dem Verbindungsabschnitt des Trägers umgeben sein.

In einem Ausführungsbeispiel weist der Verbindungabschnitt der Konsole zwei gegenüberliegende Seitenwangen auf. Vorzugsweise kann das Crashelement zwischen den gegenüberliegenden Seitenwangen angeordnet sein. Die Seitenwangen ermöglichen auf baulich einfache Weise, dass das Crashelement und der Verbindungsabschnitt des Trägers durch den Verbindungsabschnitt der Konsole umgeben werden.

In einer Weiterbildung sind die zwei gegenüberliegenden Seitenwangen bezüglich der Längsachse des Nutzfahrzeugs hintereinander angeordnet und/oder die zwei gegenüberliegenden Seitenwangen bilden ein oberes Ende der Konsole.

In einem weiteren Ausführungsbeispiel weist der Verbindungsabschnitt des Trägers ein, vorzugsweise gequetschtes und/oder gepresstes, Flachprofilstück auf. Vorzugsweise kann das Crashelement einseitig oder beidseitig von dem Flachprofilstück angeordnet sein, vorzugsweise anliegend an dem Flachprofilstück. Somit kann eine gute Kraftübertragung und ein sicherer Verbund ermöglicht werden.

Es ist möglich, dass bspw. der Verbindungsabschnitt des Trägers zwei gegenüberliegende Seitenwangen aufweist und/oder die Seitenwangen ein unteres Ende des Trägers bilden.

Es ist auch möglich, dass der Verbindungsabschnitt der Konsole ein Flachprofilstück aufweist.

In einer Weiterbildung ist das Flachprofilstück zwischen den zwei gegenüberliegenden Seitenwangen angeordnet.

In einem weiteren Ausführungsbeispiel ist der Träger bügelförmig oder U-förmig ausgebildet und/oder der Verbindungsabschnitt des Trägers ist an einem freien Ende des Trägers angeordnet.

In einer Ausführungsform sind der Verbindungsabschnitt des Trägers, der Verbindungsabschnitt der Konsole und/oder das Crashelement lösbar aneinander befestigt, vorzugsweise mittels einer oder mehreren Schraubverbindungen, die sich durch eines oder mehrere miteinander ausgerichtete Durchgangslöcher des Verbindungsabschnitts des Trägers, des Verbindungsabschnitts der Konsole und/oder des Crashelements erstrecken. Es ist möglich, dass die Schraubverbindungen während der gemeinsamen vorbestimmten Verformung der Verbindungsabschnitte und des Crashelements nicht beeinträchtigt werden.

Vorzugweise sind die Schraubverbindungen parallel zu einer Längsachse des Nutzfahrzeugs ausgerichtet.

Die Erfindung betrifft auch ein Nutzfahrzeug, vorzugsweise einen Lastkraftwagen (zum Beispiel Frontlenker-Lastkraftwagen). Das Nutzfahrzeug weist ein, vorzugsweise kippbares, Fahrerhaus und einen Fahrzeugrahmen, vorzugsweise Leiterrahmen, auf. Das Nutzfahrzeug weist ferner eine Vorrichtung wie hierin offenbart auf, die das Fahrerhaus (zum Beispiel einen hinteren Bereich des Fahrerhauses) auf dem Fahrzeugrahmen lagert.

In einer weiteren Ausführungsform ist der Träger bezüglich einer Vorwärtsfahrtrichtung des Nutzfahrzeugs hinter dem Fahrerhaus angeordnet, vorzugsweise beabstandet (z. B. in einem Abstand zwischen 10 mm und 70 mm) und/oder hinter einem (z. B. unteren) Rückwandquerträger des Fahrerhauses.

In einer weiteren Ausführungsform ist die Vorrichtung dazu ausgebildet, eine Aufprallenergie bei einem Frontalaufprall des Nutzfahrzeugs stufenförmig abzubauen.

In einer Ausführungsform kann der stufenweise Aufprallenergieabbau eine Verlagerung des Fahrerhauses entgegen einer Vorwärtsfahrtrichtung des Kraftfahrzeugs mit Deformation der Befestigungsvorrichtung, bis eine Rückwand des Fahrerhauses in Anlage mit dem Träger kommt, aufweisen. Es ist möglich, dass der Träger von dem Fahrerhaus entgegen der Vorwärtsfahrtrichtung verschoben und die Aufprallenergie in das Crashelement geleitet wird. Es ist auch möglich, dass sich das Crashelement zusammen mit dem Verbindungsbereich der Konsole und/oder dem Verbindungsbereich des Trägers vorbestimmt, vorzugsweise parallelogrammartig, unter Aufprallenergieabbau verformt.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines Fahrerhausrohbaus und einer beispielhaften Vorrichtung zum Lagern eines hinteren Bereichs eines Fahrerhauses gemäß der vorliegenden Offenbarung;
- Figur 2: eine perspektivische Ansicht der beispielhaften Vorrichtung zum Lagern eines hinteren Bereichs eines Fahrerhauses gemäß der vorliegenden Offenbarung;
- Figur 3: eine weitere perspektivische Ansicht der beispielhaften Vorrichtung zum Lagern eines hinteren Bereichs eines Fahrerhauses gemäß der vorliegenden Offenbarung; und
- Figur 4: einen Seitenansicht der beispielhaften Vorrichtung zum Lagern eines hinteren Bereichs eines Fahrerhauses gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

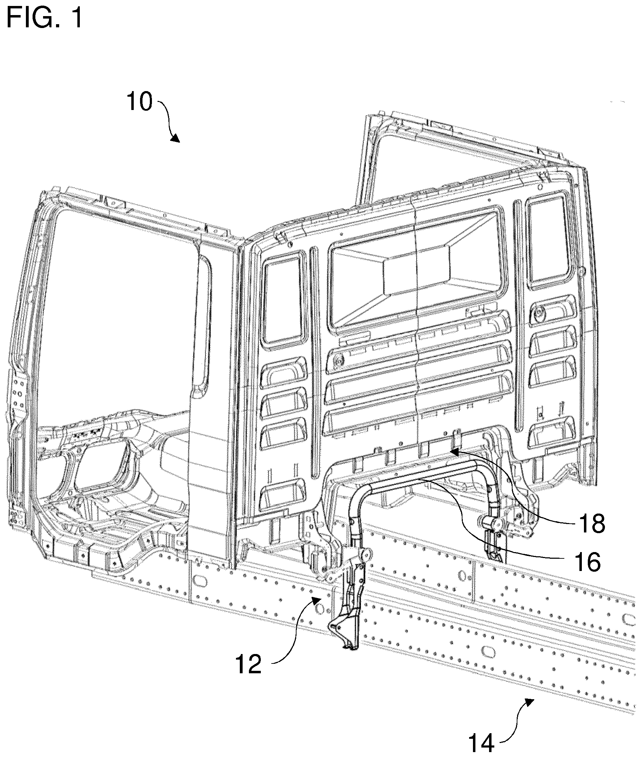

Die Figur 1 zeigt ein Fahrerhaus 10 in Rohbau, eine Vorrichtung 12 zum Lagern eines hinteren Bereichs des Fahrerhauses 10 und einen Fahrzeugrahmen 14. Das Fahrerhaus 10 und die Vorrichtung 12 können in einem Nutzfahrzeug, vorzugsweise einem Lastkraftwagen (zum Beispiel Frontlenker-Lastkraftwagen), umfasst sein. Das Fahrerhaus 10 kann ein kippbares Fahrerhaus sein.

Die Vorrichtung 12 stützt den hinteren Bereich des Fahrerhauses 10 an dem Fahrzeugrahmen 14 ab. Die Vorrichtung 12 kann beispielsweise einen (zum Beispiel unteren) Rückwandquerträger und/oder einen (zum Beispiel hinteren) Bodenquerträger des Fahrerhauses 10 abstützen. Zum Abstützen des vorderen Bereiches des Fahrerhaus 10 kann eine weitere (nicht dargestellten) Lagervorrichtung vorgesehen sein. Es ist möglich, dass das Fahrerhaus 10 gefederte und/oder gedämpft an dem Fahrzeugrahmen 14 abgestützt ist. Der Fahrzeugrahmen 14 kann beispielsweise, wie dargestellt ist, ein Leiterrahmen mit zwei parallelen Hauptlängsträgern und mehreren Querträgern, die die Hauptlängsträger miteinander verbinden, sein.

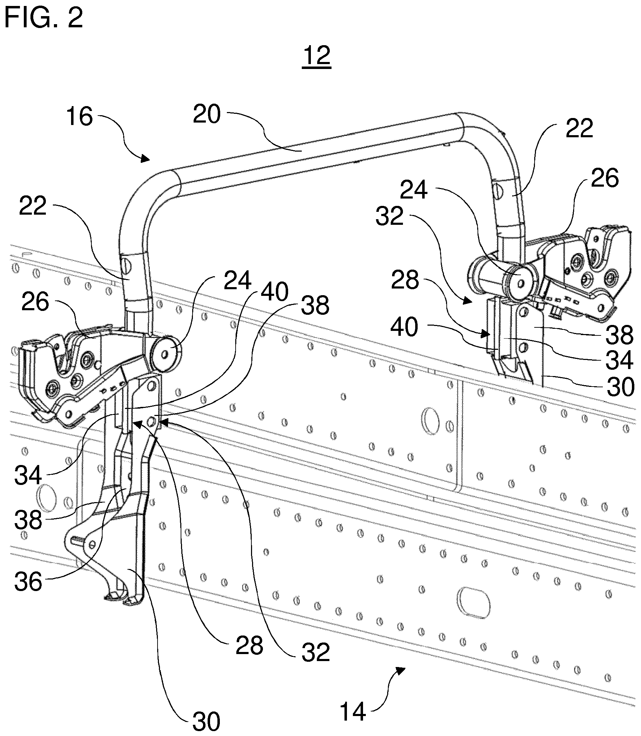

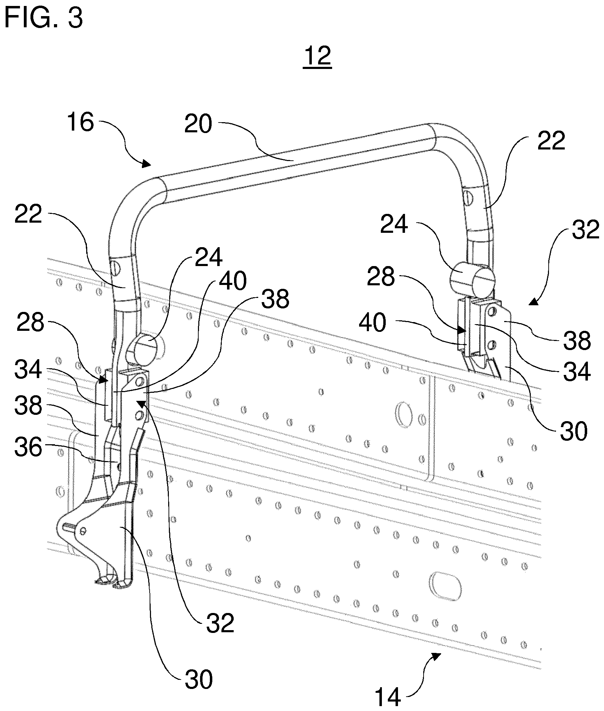

Die Vorrichtung 12 ist in den Figuren 2 bis 4 in größerem Detail dargestellt und nachfolgend beschrieben. Die Vorrichtung 12 kann, wie dargestellt ist, spiegelsymmetrisch bezüglich einer Vertikalebene sein, in der eine Mittellängsachse des Nutzfahrzeugs verläuft.

Die Vorrichtung 12 weist einen Träger 16 auf. Der Träger 16 ist in einer U-Form oder Bügelform gebildet. Der Träger 16 ist in einer Querrichtung des Nutzfahrzeugs ausgerichtet. In anderen Worten, der Träger 16 ist ein Querträger. Der Träger 16 kann beispielsweise als ein Hohlprofil, zum Beispiel ein Rundprofil oder ein Mehrkantprofil (z. B. Vierkantprofil), gebildet sein.

Der Träger 16 ist bezüglich einer Vorwärtsfahrtrichtung des Nutzfahrzeugs hinter einer Rückwand des Fahrerhauses 10 angeordnet. Insbesondere kann der Träger 16 direkt hinter einem beispielsweise unteren Rückwandquerträger 18 (siehe Figur 1) des Fahrerhauses 10 angeordnet sein. Der Träger 16 kann beabstandet zu dem Rückwandquerträger 18 angeordnet sein, zum Beispiel in einem Abstand zwischen 10 mm und 70 mm, vorzugsweise zwischen 30 mm und 40 mm.

Der Träger 16 weist einen im Wesentlichen horizontal angeordneten Mittelbereich 20 auf. An gegenüberliegenden Enden des Mittelbereichs 20 weist der Träger 16 beispielsweise vertikal oder leicht angeschrägt zur Vertikalen verlaufende Endbereiche 22 auf. Ein erster Endbereich 22 ist auf einer linken Fahrzeugseite angeordnet und ein zweiter Endbereich 22 ist auf einer rechten Fahrzeugseite angeordnet. Ein Übergang zwischen dem Mittelbereich 20 und Endbereichen 22 kann beispielsweise gebogen sein, wie dargestellt ist. Vorzugsweise kann der Mittelbereich 20 derjenige Bereich des Trägers 16 sein, der direkt hinter und beabstandet zu dem Rückwandquerträger 18 (siehe Figur 1) des Fahrerhauses 10 angeordnet ist.

Der Träger 16 weist Verbindungselemente 24 auf, vorzugsweise an den Endbereichen 22. Die Verbindungselemente 24 können beispielsweise an einer jeweiligen Innenseite der Endbereiche 22 angeordnet sein. Die Verbindungselemente 24 können, wie dargestellt ist, beispielsweise bolzen- oder zylinderförmig ausgeführt sein. Es ist möglich, dass die Verbindungselemente 24 als Schwenklager ausgebildet sind.

Die Vorrichtung 12 weist Befestigungsvorrichtungen 26 auf. Die Befestigungsvorrichtungen 26 sind an einem bezüglich der Vorwärtsfahrtrichtung hinteren Bereich des Fahrerhauses 10 beispielsweise lösbar befestigbar, wie in Fig. 1 dargestellt ist. Die Befestigungsvorrichtungen 26 sind an den Verbindungselementen 24 anbringbar, sodass zumindest der hintere Bereich des Fahrerhauses 10 mittels der Befestigungsvorrichtungen 26 von dem Träger 16 getragen ist. Im Einzelnen kann beispielsweise eine erste Befestigungsvorrichtung 26 auf einer linken Fahrzeugseite an einem ersten Verbindungselement 24 auf der linken Fahrzeugseite anbringbar sein. Eine zweite Befestigungsvorrichtung 26 auf einer rechten Fahrzeugseite kann an einem zweiten Verbindungselement 24 auf der rechten Fahrzeugseite anbringbar sein.

Bspw. können die Befestigungsvorrichtungen 26 als Verriegelungsvorrichtungen, vorzugsweise als sogenannte Fahrerhausschlösser, gebildet sein. Die Befestigungsvorrichtungen 26 können mit dem Fahrerhaus 10 und/oder mit den Verbindungselementen 24 verriegelbar (und entriegelbar) sein.

Die Befestigungsvorrichtungen 26 können gelenkig, vorzugsweise schwenkbar, mit dem Fahrerhaus 10 und/oder den Verbindungselementen 24 verbunden sein. Bspw. können die Befestigungsvorrichtungen um eine Längsachse der Verbindungselemente 24 schwenkbar sein, um eine gefederte und gedämpfte Lagerung des Fahrerhauses 10 zu ermöglichen. Die Längsachsen der Verbindungselemente 24 können bspw. parallel zu einer Fahrzeuglängsachse des Nutzfahrzeugs verlaufen.

An den freien Enden der Endbereiche 22 sind Verbindungsabschnitte 28 angeordnet. Die Verbindungsabschnitte 28 dienen dazu, den Träger 16 mit einer ersten und zweiten Konsole 30 zu verbinden, die am Fahrzeugrahmen 14 abgestützt sind. Der Fahrzeugrahmen 14 trägt somit mittels der Konsolen 30, dem Träger 16 und den Befestigungsvorrichtungen 26 den hinteren Bereich des Fahrerhauses 10. Die Konsolen 30 und/oder die Befestigungsvorrichtungen 26 können jeweils mit einer Feder-Dämpfer-Einrichtung (nicht dargestellt) verbunden sein, um eine gefederte und gedämpfte Lagerung des Fahrerhauses 10 zu ermöglichen.

Es ist auch möglich, dass die Befestigungsvorrichtungen 26 zusätzlich oder alternativ direkt an den Konsolen 30 anbringbar sind.

In der dargestellten Ausführungsform weisen die Verbindungsabschnitte 28 beispielsweise jeweils Flachprofilstücke 40 auf. Beispielsweise können die Verbindungsabschnitte 28 jeweils einen rechteckigen Querschnitt aufweisen. Die Flachprofilstücke 40 können beispielsweise gequetscht und/oder gepresst sein.

Die Verbindungsabschnitte 28 sind nicht direkt mit Verbindungsabschnitten 32 der Konsolen 30 verbunden. Stattdessen sind die Verbindungsabschnitte 28 jeweils beabstandet zu den Verbindungsabschnitten 32 angeordnet. Zwischen den Verbindungsabschnitten 32 und den Verbindungsabschnitten 28 ist jeweils ein Crashelement 34 angeordnet, wie hierin noch im Detail beschrieben ist. Beispielsweise kann, wie dargestellt ist, der Verbindungsabschnitt 28 des Trägers 16 von dem Verbindungsabschnitt 32 der Konsole 30 umgeben sein oder umgekehrt.

In der dargestellten Ausführungsform weisen die Konsolen 30 jeweils eine Grundplatte 36 und zwei winkelig dazu angeordneten Seitenwangen 38, zum Beispiel im Winkel von 90° zu Grundplatte 36, auf. Obere Bereiche der Seitenwangen 38 bilden den Verbindungsabschnitt 32 jeder Konsole 30. Die Grundplatte 36 kann beispielsweise lösbar (zum Beispiel mittels Schraubverbindungen) an dem Fahrzeugrahmen 14 befestigt sein, zum Beispiel an einer Außenlängsseite eines Längsträgers des Fahrzeugrahmens 14.

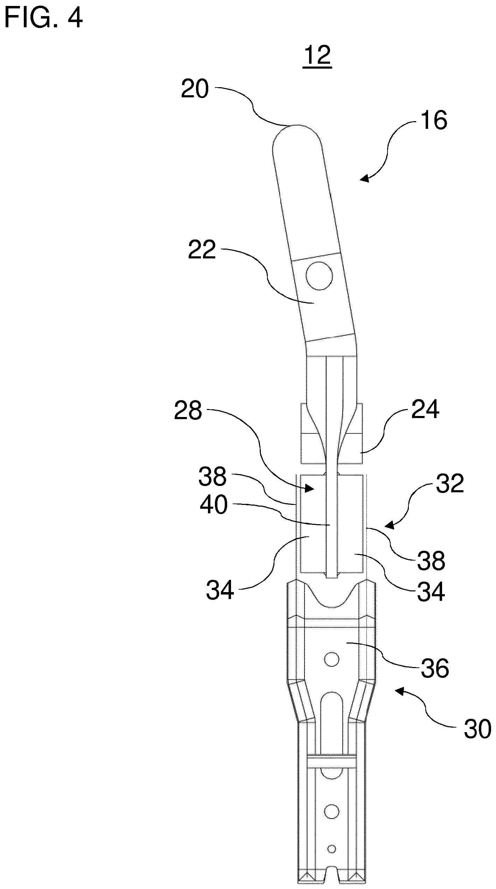

Die Verbindungsabschnitte 28, 32 und das Crashelement 34 sind in größerem Detail in Figur 4 dargestellt.

Das Crashelement 34 ist beidseitig des Flachprofilstücks 40 bezüglich einer Längsachse des Nutzfahrzeugs angeordnet. Das Crashelement 34 umgibt das Flachprofilstück 40 sandwichartig. Die Seitenwangen 38 sind beidseitig des Crashelements 34 bezüglich einer Längsachse des Nutzfahrzeugs angeordnet. Die Seitenwangen 38 umgeben das Crashelement 34 und das Flachprofilstück 40 sandwichartig. Das Crashelement 34 ist sowohl in Kontakt mit dem Flachprofilstück 40 als auch mit den Seitenwangen 38.

Das Flachprofilstück 40 ist mittels des Crashelements 34 lösbar an den Seitenwangen 38 befestigt. Beispielsweise können eine oder mehrere Schrauben vorgesehen sein, die sich durch eines oder mehrere miteinander ausgerichtete (fluchtende) Durchgangslöcher in den Seitenwangen 38, dem Crashelement 34 und dem Flachprofilstück 40 erstrecken.

Das Crashelement 34 kann einteilig oder mehrteilig sein. Das Crashelement 34 kann beispielsweise als ein Blechbauteil, zum Beispiel in U-Form, ausgebildet sein. Es ist auch möglich, dass das Crashelement 34 beispielsweise eine Faltenbalg-Form aufweist.

Nachfolgend ist die Funktionsweise der Vorrichtung 12 unter Bezugnahme auf die Figuren 1 bis 4 beschrieben.

Die Vorrichtung 12 kann eine Aufprallenergie bei einem Frontalaufprall auf das Fahrerhaus 10 stufenförmig abbauen. Kommt es zu einem Frontalaufprall wird das Fahrerhaus 10, das ebenfalls am vorderen Ende gelenkig mit dem Fahrzeugrahmen 14 verbunden sein kann, nach hinten entgegengesetzt zu einer Vorwärtsfahrtrichtung des Nutzfahrzeugs 10 verschoben. Dabei werden in einer ersten Stufe des Aufprallenergieabbaus die Befestigungsvorrichtungen 26 derart verformt, bis eine Rückwand des Fahrerhauses 10 in Kontakt mit dem Träger 16 kommt. Nun wird das Fahrerhaus 10 durch den Träger 16 gestützt. Der Träger 16 und das Fahrerhaus 10 werden in einer weiteren Stufe des Aufprallenergieabbaus weiter nach hinten verschoben. Diese Rückverlagerung wird in die Crashelemente 34 geleitet. Das Crashelement 34 ermöglicht in einer weiteren Stufe des Aufprallenergieabbaus, dass sich das Flachprofilstück 40, das Crashelement 34 und die Seitenwangen 38 gemeinsam auf eine vorbestimmte Weise verformen, ohne dass deren Verbindung bricht oder gelöst wird. Durch die gemeinsame Verformung wird Aufprallenergie abgebaut. Durch die Crashelemente 34 wird die Verformbarkeit der gesamten hinteren Lagerung des Fahrerhauses 10 erhöht und somit der Überlebensraum der Fahrerhausinsassen vergrößert.

Beispielsweise kann die vorbestimmte Verformung wie folgt parallelogrammartig erfolgen. Die vorbestimmte Verformung kann eine Formänderung von einem rechteckförmigen gemeinsamen Querschnitt (in einer Vertikalebene) des Flachprofilstücks 40, des Crashelements 34 und der Seitenwangen 38 zu einem schiefwinkligen parallelogrammförmigen Querschnitt aufweisen. In anderen Worten, eine durch das Flachprofilstück 40, das Crashelement 34 und die Seitenwangen 38 gebildete Quaderform kann zu einer schiefwinkligen Parallelepipedform verformt werden.

Insbesondere kann die bezüglich der Vorwärtsfahrtrichtung betrachtet hintere Seitenwangen 38 im Verbindungsabschnitt 32 an einer Stelle, die einem unteren Ende des Crashelements 34 entspricht, nach hinten entgegen der Vorwärtsfahrtrichtung abknicken. Das Crashelement 34, das Flachprofilstück 40 und die andere Seitenwangen 38 können dieser Abknickbewegung folgen und sich dabei ebenfalls verformen. Bei dieser gemeinsamen vorbestimmten Verformung wird die Verbindung zwischen den Seitenwangen 38, dem Crashelement 34 und dem Flachprofilstück 40 nicht gelöst und die Seitenwangen 38 brechen aufgrund des Verbunds nicht im Verbindungsabschnitt 32 ab. Das Crashelement 34 reduziert die Belastungen auf die Konsole 30 während der Verformung und erhöht die Verformbarkeit, sodass mehr Energie absorbiert werden kann.

### Bezugszeichenliste

- 10: Fahrerhaus
- 12: Vorrichtung zum Lagern eines hinteren Bereiches eines Fahrerhauses
- 14: Fahrzeugrahmen
- 16: Träger
- 18: Rückwandquerträger
- 20: Mittelbereich
- 22: Endbereich
- 24: Verbindungselement
- 26: Befestigungsvorrichtung
- 28: Verbindungsabschnitt
- 30: Konsole
- 32: Verbindungsabschnitt
- 34: Crashelement
- 36: Grundplatte
- 38: Seitenwange
- 40: Flachprofilstück

## Patentansprüche

1. Vorrichtung (12) zum Lagern eines hinteren Bereichs eines Fahrerhauses (10) eines Nutzfahrzeugs, aufweisend:
einen Träger (16), vorzugweise Querträger;
eine Konsole (30), die zum Befestigen an einem Fahrzeugrahmen (14) des Nutzfahrzeugs ausgebildet ist;
eine Befestigungsvorrichtung (26), die zum Befestigen am Fahrerhaus (10) ausgebildet ist und an dem Träger (16) und/oder der Konsole (30) zum Abstützen des Fahrerhauses (10) anbringbar ist, vorzugsweise gelenkig und/oder verriegelbar; **gekennzeichnet durch**
ein Crashelement (34), das einen Verbindungsabschnitt (28) des Trägers (16) mit einem Verbindungsabschnitt (32) der Konsole (30) verbindet und bezüglich einer Längsachse des Nutzfahrzeugs zwischen dem Verbindungsabschnitt (28) des Trägers (16) und dem Verbindungsabschnitt (32) der Konsole (30) angeordnet ist.

2. Vorrichtung (12) nach Anspruch 1, wobei:
das Crashelement (34) dazu ausgebildet ist, sich bei einem Frontalaufprall des Nutzfahrzeugs mit dem Verbindungsabschnitt (32) der Konsole (30) und/oder dem Verbindungsabschnitt (28) des Trägers (16) unter einem Aufprallenergieabbau vorbestimmt zu verformen, vorzugsweise parallelogrammartig.

3. Vorrichtung (12) nach Anspruch 2, wobei:
die vorbestimmte Verformung eine Formänderung von einem rechteckförmigen Querschnitt zu einem schiefwinkligen parallelogrammförmigen Querschnitt aufweist; und/oder
die vorbestimmte Verformung eine Formänderung von einer Quaderform zu einer schiefwinkligen Parallelepipedform aufweist.

4. Vorrichtung (12) nach Anspruch 2 oder Anspruch 3, wobei während der vorbestimmten Verformung:
eine Abstützung des Trägers (16) an dem Fahrzeugrahmen (14) durch die Konsole (30) mittels des Crashelements (34) erhalten bleibt; und/oder
die Verbindung zwischen dem Verbindungsabschnitt (28) des Trägers (16) und dem Verbindungsabschnitt (32) der Konsole (30) durch das Crashelement (34) erhalten bleibt.

5. Vorrichtung (12) nach einem der vorherigen Ansprüche, wobei:
das Crashelement (34) den Verbindungsabschnitt (28) des Trägers (16) oder den Verbindungsabschnitt (32) der Konsole (30) sandwichartig und/oder zumindest zweiseitig umgibt; und/oder
das Crashelement (34) in direktem Kontakt mit dem Verbindungsabschnitt (28) des Trägers (16) und/oder dem Verbindungsabschnitt (32) der Konsole (30) ist.

6. Vorrichtung (12) nach einem der vorherigen Ansprüche, wobei:
der Verbindungsabschnitt (28) des Trägers (16) von dem Verbindungsabschnitt (32) der Konsole (30) beabstandet ist; und/oder
der Verbindungsabschnitt (28) des Trägers (16) von dem Verbindungsabschnitts (32) der Konsole (30) umgeben ist oder der Verbindungsabschnitt (32) der Konsole (30) von dem Verbindungsabschnitt (28) des Trägers (16) umgeben ist.

7. Vorrichtung (12) nach einem der vorherigen Ansprüche, wobei:
der Verbindungabschnitt der Konsole (30) zwei gegenüberliegende Seitenwangen (38) aufweist; und
das Crashelement (34) zwischen den gegenüberliegenden Seitenwangen (38) angeordnet ist.

8. Vorrichtung (12) nach Anspruch 7, wobei:
die zwei gegenüberliegenden Seitenwangen (38) bezüglich der Längsachse des Nutzfahrzeugs hintereinander angeordnet sind; und/oder
die zwei gegenüberliegenden Seitenwangen (38) ein oberes Ende der Konsole (30) bilden.

9. Vorrichtung (12) nach einem der vorherigen Ansprüche, wobei:
der Verbindungsabschnitt (28) des Trägers (16) ein, vorzugsweise gequetschtes und/oder gepresstes, Flachprofilstück (40) aufweist; und
das Crashelement (34) einseitig oder beidseitig von dem Flachprofilstück (40) angeordnet ist, vorzugsweise anliegend.

10. Vorrichtung (12) nach Anspruch 7 oder 8 und Anspruch 9, wobei:
das Flachprofilstück (40) zwischen den zwei gegenüberliegenden Seitenwangen (38) angeordnet ist.

11. Vorrichtung (12) nach einem der vorherigen Ansprüche, wobei:
der Träger (16) bügelförmig oder U-förmig ausgebildet ist; und
der Verbindungsabschnitt (28) des Trägers (16) an einem freien Ende des Trägers (16) angeordnet ist.

12. Vorrichtung (12) nach einem der vorherigen Ansprüche, wobei:
der Verbindungsabschnitt (28) des Trägers (16), der Verbindungabschnitt der Konsole (30) und das Crashelement (34) lösbar aneinander befestigt sind, vorzugsweise mittels einer oder mehreren Schraubverbindungen, die sich durch eines oder mehrere miteinander ausgerichtete Durchgangslöcher des Verbindungsabschnitts (28) des Trägers (16), des Verbindungsabschnitts (32) der Konsole (30) und des Crashelements (34) erstrecken.

13. Nutzfahrzeug, vorzugsweise Lastkraftwagen, aufweisend:
ein, vorzugsweise kippbares, Fahrerhaus (10);
einen Fahrzeugrahmen (14), vorzugsweise Leiterrahmen;
eine Vorrichtung (12) nach einem der vorherigen Ansprüche, die das Fahrerhaus (10) auf dem Fahrzeugrahmen (14) lagert.

14. Nutzfahrzeug nach Anspruch 13, wobei
der Träger (16) bezüglich einer Vorwärtsfahrtrichtung des Nutzfahrzeugs hinter dem Fahrerhaus (10) angeordnet ist, vorzugsweise beabstandet und/oder hinter einem Rückwandquerträger (18) des Fahrerhauses (10).

15. Nutzfahrzeug nach Anspruch 13 oder Anspruch 14, wobei:
die Vorrichtung (12) dazu ausgebildet ist, eine Aufprallenergie bei einem Frontalaufprall des Nutzfahrzeugs stufenförmig abzubauen, vorzugsweise mit:
einer Verlagerung des Fahrerhauses (10) entgegen einer Vorwärtsfahrtrichtung des Kraftfahrzeugs mit einer Deformation der Befestigungsvorrichtung (26) bis eine Rückwand des Fahrerhauses (10) in Anlage mit dem Träger (16) kommt;
der Träger (16) von dem Fahrerhaus (10) entgegen der Vorwärtsfahrtrichtung verschoben und die Aufprallenergie in das Crashelement (34) geleitet wird; und
das Crashelement (34) sich zusammen mit dem Verbindungsbereich der Konsole (30) und/oder dem Verbindungsbereich des Trägers (16) vorbestimmt, vorzugsweise parallelogrammartig, unter Aufprallenergieabbau verformt.

## Claims

1. A device (12) for supporting a rear region of a driver's cab (10) of a commercial vehicle, having:
a support (16), preferably transverse support;
a bracket (30) which is designed for fastening to a vehicle frame (14) of the commercial vehicle;
a fastening device (26) which is designed for fastening to the driver's cab (10) and is attachable, preferably in an articulated and/or lockable manner, to the support (16) and/or the bracket (30) for supporting the driver's cab (10); **characterized by** a crash element (34) which connects a connecting portion (28) of the support (16) to a connecting portion (32) of the bracket (30) and is arranged between the connecting portion (28) of the support (16) and the connecting portion (32) of the bracket (30) with respect to a longitudinal axis of the commercial vehicle.

2. The device (12) according to Claim 1, wherein:
the crash element (34) is designed so as, in the event of a frontal impact of the commercial vehicle, to be deformed in a predefined manner, preferably in the manner of a parallelogram, with the connecting portion (32) of the bracket (30) and/or the connecting portion (28) of the support (16) with impact energy being dissipated.

3. The device (12) according to Claim 2, wherein:
the predefined deformation comprises a change in shape from a rectangular cross section to an oblique-angled, parallelogram-shaped cross section; and/or
the predefined deformation comprises a change in shape from a cuboidal shape to an oblique-angled parallelepiped shape.

4. The device (12) according to Claim 2 or Claim 3, wherein, during the predefined deformation:
support of the support (16) on the vehicle frame (14) by the bracket (30) is maintained by means of the crash element (34); and/or
the connection between the connecting portion (28) of the support (16) and the connecting portion (32) of the bracket (30) is maintained by the crash element (34).

5. The device (12) according to one of the preceding claims, wherein:
the crash element (34) surrounds the connecting portion (28) of the support (16) or the connecting portion (32) of the bracket (30) in a sandwich-like manner and/or at least on two sides; and/or
the crash element (34) is in direct contact with the connecting portion (28) of the support (16) and/or with the connecting portion (32) of the bracket (30).

6. The device (12) according to one of the preceding claims, wherein:
the connecting portion (28) of the support (16) is spaced apart from the connecting portion (32) of the bracket (30); and/or
the connecting portion (28) of the support (16) is surrounded by the connecting portion (32) of the bracket (30), or the connecting portion (32) of the bracket (30) is surrounded by the connecting portion (28) of the support (16) .

7. The device (12) according to one of the preceding claims, wherein:
the connecting portion of the bracket (30) has two opposite side faces (38); and
the crash element (34) is arranged between the opposite side faces (38).

8. The device (12) according to Claim 7, wherein:
the two opposite side faces (38) are arranged one behind the other with respect to the longitudinal axis of the commercial vehicle; and/or
the two opposite side faces (38) form an upper end of the bracket (30).

9. The device (12) according to one of the preceding claims, wherein:
the connecting portion (28) of the support (16) has a, preferably squeezed and/or pressed, flat profile piece (40); and
the crash element (34) is arranged on one side or both sides of the flat profile piece (40), preferably in a manner lying thereagainst.

10. The device (12) according to Claim 7 or 8 and Claim 9, wherein:
the flat profile piece (40) is arranged between the two opposite side faces (38).

11. The device (12) according to one of the preceding claims, wherein:
the support (16) is of bow-shaped or U-shaped design; and
the connecting portion (28) of the support (16) is arranged at the free end of the support (16).

12. The device (12) according to one of the preceding claims, wherein:
the connecting portion (28) of the support (16), the connecting portion of the bracket (30) and the crash element (34) are fastened releasably to one another, preferably by means of one or more screw connections which extend through one or more mutually aligned passage holes in the connecting portion (28) of the support (16), in the connecting portion (32) of the bracket (30) and in the crash element (34).

13. A commercial vehicle, preferably a truck, having:
a, preferably tiltable, driver's cab (10);
a vehicle frame (14), preferably ladder frame;
a device (12) according to one of the preceding claims which supports the driver's cab (10) on the vehicle frame (14).

14. The commercial vehicle according to Claim 13, wherein
the support (16) is arranged behind the driver's cab (10) with respect to a forwards direction of travel of the commercial vehicle, preferably at a distance and/or behind a rear wall transverse support (18) of the driver's cab (10).

15. The commercial vehicle according to Claim 13 or Claim 14, wherein:
the device (12) is designed to dissipate an impact energy in the event of a frontal impact of the commercial vehicle in a step-shaped manner, preferably with:
moving of the driver's cab (10) counter to a forwards direction of travel of the motor vehicle with deformation of the fastening device (26) until a rear wall of the driver's cab (10) comes into contact with the support (16);
the support (16) is displaced by the driver's cab (10) counter to the forwards direction of travel and the impact energy is conducted into the crash element (34); and
the crash element (34) together with the connecting region of the bracket (30) and/or the connecting region of the support (16) is deformed in a predefined manner, preferably in the manner of a parallelogram, with impact energy being dissipated.

## Revendications

1. Dispositif (12) servant à supporter une région arrière d'une cabine de conducteur (10) d'un véhicule utilitaire, présentant :
un support (16), de préférence une traverse ;
une console (30) qui est réalisée pour la fixation à un cadre (14) du véhicule utilitaire ;
un dispositif de fixation (26) qui est réalisé pour la fixation à la cabine de conducteur (10) et peut être monté sur le support (16) et/ou la console (30) pour assurer l'appui de la cabine de conducteur (10), de préférence de manière articulée et/ou verrouillable ;
**caractérisé par** un élément d'absorption de chocs (34) qui relie une partie de liaison (28) du support (16) à une partie de liaison (32) de la console (30) et est disposé, par rapport à un axe longitudinal du véhicule utilitaire, entre la partie de liaison (28) du support (16) et la partie de liaison (32) de la console (30).

2. Dispositif (12) selon la revendication 1, dans lequel :
l'élément d'absorption de chocs (34) est réalisé, en cas de collision frontale du véhicule utilitaire, pour se déformer de manière prédéfinie, de préférence en forme de parallélogramme, avec la partie de liaison (32) de la console (30) et/ou la partie de liaison (28) du support (16) avec une réduction de l'énergie de collision.

3. Dispositif (12) selon la revendication 2, dans lequel :
la déformation prédéfinie présente un changement de forme d'une section transversale rectangulaire à une section transversale en forme de parallélogramme à angles obliques et/ou
la déformation prédéfinie présente un changement de forme d'un parallélépipède rectangle à une forme parallélépipédique à angles obliques.

4. Dispositif (12) selon la revendication 2 ou la revendication 3, dans lequel pendant la déformation prédéfinie :
un appui du support (16) sur le cadre de véhicule (14) par le biais de la console (30) est maintenu au moyen de l'élément d'absorption de chocs (34) ; et/ou la liaison entre la partie de liaison (28) du support (16) et la partie de liaison (32) de la console (30) est maintenue par le biais de l'élément d'absorption de chocs (34) .

5. Dispositif (12) selon l'une des revendications précédentes, dans lequel :
l'élément d'absorption de chocs (34) entoure la partie de liaison (28) du support (16) ou la partie de liaison (32) de la console (30) à la manière d'un sandwich et/ou au moins de manière bilatérale ; et/ou
l'élément d'absorption de chocs (34) est en contact direct avec la partie de liaison (28) du support (16) et/ou la partie de liaison (32) de la console (30).

6. Dispositif (12) selon l'une des revendications précédentes, dans lequel :
la partie de liaison (28) du support (16) est espacée de la partie de liaison (32) de la console (30) ; et/ou la partie de liaison (28) du support (16) est entourée par la partie de liaison (32) de la console (30) ou la partie de liaison (32) de la console (30) est entourée par la partie de liaison (28) du support (16).

7. Dispositif (12) selon l'une des revendications précédentes, dans lequel :
la partie de liaison de la console (30) comprend deux joues latérales (38) en regard ; et
l'élément d'absorption de chocs (34) est disposé entre les joues latérales (38) en regard.

8. Dispositif (12) selon la revendication 7, dans lequel :
les deux joues latérales (38) en regard sont disposées l'une derrière l'autre par rapport à l'axe longitudinal du véhicule utilitaire ; et/ou
les deux joues latérales (38) en regard forment une extrémité supérieure de la console (30).

9. Dispositif (12) selon l'une des revendications précédentes, dans lequel :
la partie de liaison (28) du support (16) présente une pièce profilée plate (40) de préférence écrasée et/ou emboutie ; et
l'élément d'absorption de chocs (34) est disposé d'un côté ou des deux côtés de la pièce profilée plate (40), de préférence de manière adjacente.

10. Dispositif (12) selon la revendication 7 ou 8 et la revendication 9, dans lequel :
la pièce profilée plate (40) est disposée entre les deux joues latérales (38) en regard.

11. Dispositif (12) selon l'une des revendications précédentes, dans lequel :
le support (16) est réalisé en forme d'étrier ou en forme de U ; et
la partie de liaison (28) du support (16) est disposée à une extrémité libre du support (16).

12. Dispositif (12) selon l'une des revendications précédentes, dans lequel :
la partie de liaison (28) du support (16), la partie de liaison de la console (30) et l'élément d'absorption de chocs (34) sont fixés les uns aux autres de manière amovible, de préférence au moyen d'une ou plusieurs liaisons par vissage qui s'étendent à travers un ou
plusieurs trous traversants, alignés les uns avec les autres, de la partie de liaison (28) du support (16), de la partie de liaison (32) de la console (30) et de l'élément d'absorption de chocs (34).

13. Véhicule utilitaire, de préférence poids lourd, présentant :
une cabine de conducteur (10) de préférence basculante ; un cadre de véhicule (14), de préférence un cadre en forme d'échelle ;
un dispositif (12) selon l'une des revendications précédentes, lequel supporte la cabine de conducteur (10) sur le cadre de véhicule (14).

14. Véhicule utilitaire selon la revendication 13, dans lequel
le support (16) est disposé derrière la cabine de conducteur (10) par rapport à un sens de marche avant du véhicule utilitaire, de préférence de manière espacée et/ou derrière une traverse de paroi arrière (18) de la cabine de conducteur (10).

15. Véhicule utilitaire selon la revendication 13 ou la revendication 14, dans lequel :
le dispositif (12) est réalisé pour réduire par degrés une énergie de collision en cas de collision frontale du véhicule utilitaire, de préférence avec :
un décalage de la cabine de conducteur (10) en sens inverse du sens de marche avant du véhicule automobile avec une déformation du dispositif de fixation (26) jusqu'à ce qu'une paroi arrière de la cabine de conducteur (10) vienne en appui contre le support (16) ; le support (16) est déplacé par la cabine de conducteur (10) en sens inverse du sens de marche avant et l'énergie de collision est guidée dans l'élément d'absorption de chocs (34) ; et
l'élément d'absorption de chocs (34) se déforme conjointement avec la région de liaison de la console (30) et/ou la région de liaison du support (16) de manière prédéfinie, de préférence en forme de parallélogramme, avec réduction de l'énergie de collision.
